# EUROPEAN PATENT SPECIFICATION

(11) **EP 3 214 320 B1**
(45) Date of publication and mention of the grant of the patent: **26.12.2018**
(21) Application number: 17157834.7
(22) Date of filing: 24.02.2017
(51) Int. Cl.: F15B 19/00, F16H 61/12

(54) **METHOD FOR EVALUATING A POSSIBLE REDUCTION IN THE OIL LEVEL IN A HYDRAULIC ACTUATION SYSTEM, IN PARTICULAR A HYDRAULIC ACTUATION SYSTEM FOR A VEHICLE TRANSMISSION**
VERFAHREN ZUR BEWERTUNG EINER MÖGLICHEN VERRINGERUNG DES ÖLSTANDS IN EINEM HYDRAULISCHEN BETÄTIGUNGSSYSTEM, INSBESONDERE IN EINEM HYDRAULISCHEN BETÄTIGUNGSSYSTEM FÜR EIN FAHRZEUGGETRIEBE
PROCÉDÉ POUR ÉVALUER UNE RÉDUCTION POSSIBLE DU NIVEAU D'HUILE DANS UN SYSTÈME D'ACTIONNEMENT HYDRAULIQUE, EN PARTICULIER UN SYSTÈME D'ACTIONNEMENT HYDRAULIQUE D'UNE TRANSMISSION DE VÉHICULE

(30) Priority: 01.03.2016 IT UB20161185
(43) Date of publication of application: 06.09.2017
(73) Proprietor: Magneti Marelli S.p.A., 20011 Corbetta (MI) (IT)
(72) Inventor: RUO RUI, Elena, 10080 Salassa (TO) (IT); AMISANO, Fabrizio, 10144 Torino (IT); MEDICO, Giuseppe, 10051 Avigliana (TO) (IT)
(74) Representative: Rondano, Davide

(56) References cited:
- EP-A1- 2 270 342
- EP-A2- 2 402 604
- US-A1- 2004 090 347
- US-A1- 2013 253 854

## Description

The present invention relates to a method for evaluating a possible reduction in the oil level below a given alert level in a hydraulic actuation system comprising at least one hydraulic actuator and a hydraulic control circuit for controlling the hydraulic actuator(s), wherein the hydraulic control circuit comprises a pump, a motor for driving the pump, an accumulator arranged to be charged by the pump and a pressure sensor for measuring the pressure in the circuit. Although the invention is described herein with particular reference to its application to a hydraulic actuation system for a vehicle transmission, it is, however, applicable to any other hydraulic actuation system comprising a pump, an accumulator and a pressure sensor.

There are at present no systems for detecting a possible reduction in the oil level (for example due to leaks) in the circuit of a hydraulic actuation system, in particular a hydraulic actuation system for a vehicle transmission, below a given alert level and for providing an error message to the operator (driver) before this reduction causes damage to the system.

A method for evaluating a reduction of the oil level in a hydraulic system is known from EP-2 402 604-A2.

It is therefore an object of the present invention to make it possible to check in an easy and inexpensive way whether the oil level in a hydraulic actuation system, particularly for a vehicle transmission, has decreased below a given alert level. More specifically, the present invention aims to provide a method for evaluating a possible reduction of the oil level below a given alert level in a hydraulic actuation system using the components already present in the hydraulic actuation system, without the need therefore to introduce additional components into the system.

This and other objects are fully achieved according to the present invention by virtue of a method comprising the steps defined in the appended independent claim 1.

Preferred ways for carrying out a method according to the invention are the subject-matter of the dependent claims, the content of which is to be understood as forming an integral and integrating part of the present description.

In summary, the invention is based on the idea of evaluating a possible reduction in the oil level below a given alert level in a hydraulic actuation system by charging the accumulator and measuring, via the pressure sensor, the pressure in the circuit. If the pressure does not reach a given threshold value within a given period of time (typically a period of a few seconds, for example from 3 to 10 seconds) longer than or equal to the time required in the case of normal oil level, that is to say, when the oil level is higher than the alert level, this means that the oil level in the circuit has decreased below the alert level, for example due to an oil leak. An error signal is then generated for the operator (i.e. for the driver, in the case of application of the method to a hydraulic actuation system for a vehicle transmission). Such a method allows to detect any reduction in the oil level in the system below a given alert level, using the components already normally present in the system and therefore without the need to install additional components.

According to a mode for carrying out the method of the invention, in case the hydraulic actuation system is equipped with an electric pump, i.e. a pump driven by an electric motor, during the accumulator charging phase the current absorbed by the electric motor is also measured, in addition to the pressure in the circuit. If the oil level in the circuit is above the alert level, then the current absorbed by the electric motor will reach a given threshold value within a given period of time. If the oil level is reduced below the alert level, for example because of leakages, then the current will not reach the aforementioned threshold value within a predetermined time, and an error signal will therefore be generated. Therefore, by measuring also the current absorbed by the electric motor, in addition to the pressure in the circuit, during the accumulator charging cycle, a redundant control is obtained, and therefore the risk of generating false error signals is minimized. The measurement of the current absorbed by the electric motor can be advantageously carried out by the same electronic control unit which drives the electric motor, and thus there is no need to add a current sensor.

Preferably, the pressure (and possibly also the current absorbed by the electric motor) is measured when the battery charge cycle takes place in certain conditions, for example when the oil temperature in the circuit is within a given temperature range, when the system is idle and there is thus no oil consumption, when the values of the lateral and longitudinal acceleration of the vehicle are within given ranges, when both the pump and the motor are operating properly and/or when the voltage level in the battery which powers the electric motor is above a given minimum voltage value.

Preferably, the error signal generated following the detection of a condition where the oil level in the system is below the alert level is communicated to the operator (driver), for example, by turning on a special warning light or by emitting an acoustic signal.

Further features and advantages of the present invention will become more apparent from the following detailed description, given purely by way of non-limiting example with reference to the accompanying drawings, in which:
Figure 1 schematically shows a hydraulic actuation system to which the method of the present invention is applicable;
Figure 2 is a graph showing an example of the trend over time of the pressure in a hydraulic actuation system such as that of Figure 1, respectively in normal operating conditions and in case of an oil level in the system lower than the alert level; and
Figure 3 is a graph showing an example of the trend over time of the current absorbed by the electric motor driving the pump in a hydraulic actuation system such as that of Figure 1, respectively in normal operating conditions and in case of an oil level in the system lower than the alert level.

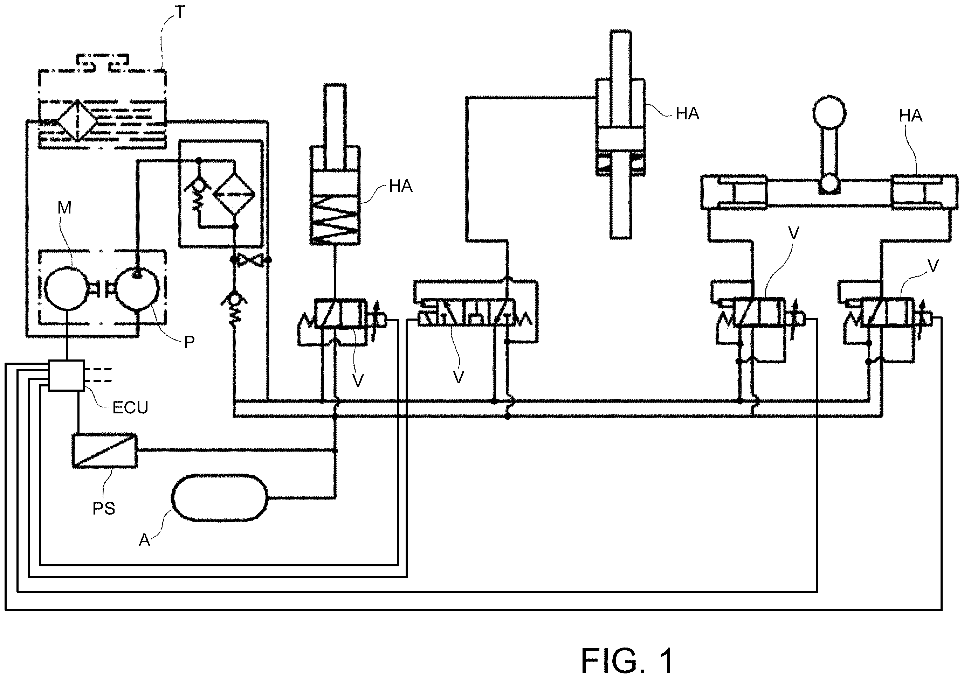

Figure 1 schematically shows a hydraulic actuation system to which the method of the present invention is applicable. More specifically, the hydraulic actuation system shown therein is a hydraulic actuation system for a vehicle transmission. However, as mentioned earlier, this application is to be understood as purely exemplary, and therefore non-limiting of the scope of protection of the present application.

The hydraulic actuation system comprises at least one hydraulic actuator HA (three hydraulic actuators in the example shown in Figure 1) and a hydraulic control circuit for controlling the hydraulic actuator(s) HA. The hydraulic control circuit comprises a tank T, a pump P, a motor M for controlling the pump P, an accumulator A, a pressure sensor PS for measuring the pressure of the oil in the circuit (corresponding to the pressure of the oil in the accumulator A), and at least one valve V for controlling the oil flow to and from the at least one hydraulic actuator HA. Preferably, the motor M is an electric motor. The hydraulic actuation system further comprises an electronic control unit ECU configured to manage the operation of the system by driving the motor M, controlling the valve(s) V and receiving in input the signals generated by the pressure sensor PS and by any additional sensors provided in the system. The electronic control unit ECU is also able to measure the current absorbed by the electric motor M, which allows to avoid the use of a special sensor for measuring the current absorbed by the electric motor M.

All the above components of the hydraulic control circuit are of a type known per se and will therefore not be described further.

A possible reduction in the oil level in the circuit below the alert level, due, for example, to oil leakages, is ascertained in the following manner.

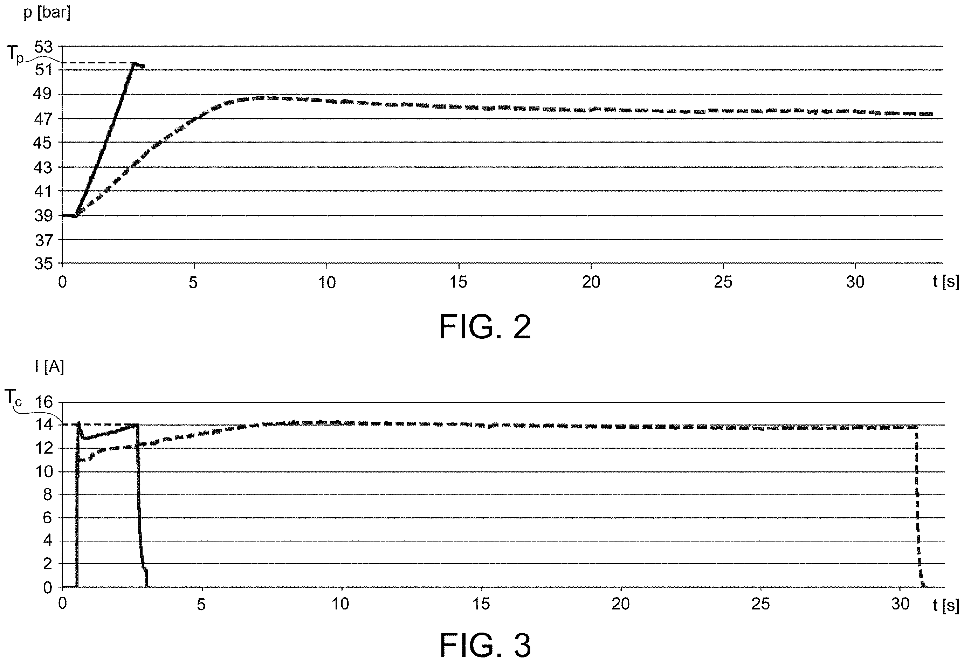

By operating the pump P through the motor M, the accumulator A is charged and, during the charging phase, the pressure is measured by the pressure sensor PS. In normal operating conditions of the system, the pressure reaches a given threshold pressure value T_{P} within a given period of time from the start of the charging phase. In this case, the trend of the pressure over time is similar to that of the solid line curve of the graph of n Figure 2, where the pressure values are to be understood as being purely illustrative. This trend can be detected experimentally and/or simulated by means of an appropriate mathematical model of the hydraulic actuation system. In case of a reduction in the oil level in the circuit below the alert value, during the accumulator charging phase the pressure increases more slowly up to a maximum value which is lower than the aforementioned threshold pressure value Tₚ, with a trend of the type of the dashed line curve of the graph of Figure 2. If, therefore, once the charging of the accumulator A has started, the pressure does not reach the aforementioned threshold pressure value T_{P} within a given period of time (typically on the order of a few seconds, for example from 3 to 10 seconds), the electronic control unit ECU detects a condition of insufficient oil level in the circuit and consequently generates an error signal, which can be communicated to the operator (that is to say, to the driver of the vehicle, in the case of application of the method to a hydraulic actuation system for a vehicle transmission) in the form of a warning light or an acoustic signal.

In case an electric motor such as the motor M is used for driving the pump P, not only the pressure but also the current absorbed by the electric motor M during the accumulator charging phase is measured by means of the electronic control unit ECU. The absorbed current is proportional to the pressure, and therefore the trend over time of the current during the accumulator charging phase has a trend similar to that of the pressure, as shown in the graph of Figure 3, where the current values shown are intended to be purely illustrative. The solid line curve of the graph of Figure 3 shows the trend over time of the current under normal operating conditions, i.e. when the oil level in the circuit is higher than the alert level, wherein the current, after an initial peak due to the increased current that the electric motor absorbs at start up, increases until it reaches a given threshold current value T_{c}. The dashed line curve shows instead the trend of the current in case of an insufficient oil level in the circuit. In this second case, after the initial peak the current increases up to a maximum value less than the aforementioned threshold current value T_{c} and, in any case, does not reach this threshold current value within a given period of time. Preferably, in order to avoid that, in conditions of insufficient oil level in the hydraulic circuit, a possible initial peak current equal to at least the threshold current value T_{c} does not lead to generate an error signal, the evaluation on reaching a current value equal to at least the threshold current value T_{c} is performed excluding the first period of time from the beginning of the accumulator charging phase, e.g. the first second or the first 0,5 seconds. By measuring then both the pressure and the current absorbed by the electric motor during the accumulator charging phase, a redundant control is obtained and therefore the risk of erroneously generating an error signal for an insufficient oil level in the circuit is reduced.

Preferably, the evaluation method described above is carried out if at least one of the following conditions occurs:
- the oil temperature in the circuit (the value of which is already normally estimated by the electronic control unit, and therefore a special sensor is not required) is within a given temperature range;
- the system is idle (i.e. no hydraulic actuator is working) and there is thus no oil consumption;
- the lateral and longitudinal acceleration values of the vehicle (or, more generally, the lateral and longitudinal acceleration values to which the hydraulic actuation system is subject) are within given acceleration ranges;
- both the pump and the motor are working properly, that is, there are no failures or malfunctions in these two components of the system; and
- the voltage level of the battery (which powers the motor that drives the pump, naturally in case this motor is an electric one) is above a given minimum voltage value.

As is evident from the description given above, the method for evaluating any reduction of the oil level below an alert level in a hydraulic actuation system according to the invention has the advantage of using components already present in the system and therefore does not require the introduction of additional components. It is therefore a simple and inexpensive method to implement. Moreover, the method is quick and reliable to carry out.

Naturally, the principle of the invention remaining unchanged, the embodiments and constructional details may be greatly varied with respect to those described and illustrated here purely by way of a non-limiting example, without thereby departing from the scope of the invention as defined in the accompanying claims.

## Claims

1. Method for evaluating a possible reduction in the oil level below a given alert level in a hydraulic actuation system, in particular a hydraulic actuation system for a vehicle transmission, wherein the hydraulic actuation system comprises at least one hydraulic actuator (HA) and a hydraulic control circuit for controlling said at least one hydraulic actuator (HA), and wherein the hydraulic control circuit comprises a pump (P), a motor (M) for driving the pump (P), an accumulator (A) arranged to be charged by the pump (P) and a pressure sensor (PS) for measuring the pressure in the circuit,
the method comprising the steps of:
a) charging the accumulator (A) by driving the pump (P) by means of the motor (M);
b) measuring the pressure in the circuit by means of the pressure sensor (PS) while the accumulator (A) is being charged; and
c) generating an error signal if the pressure value measured at step b) does not reach a given threshold pressure value (Tₚ) within a given first period of time starting from the beginning of step a).

2. Method according to claim 1, wherein the motor (M) is an electric motor, wherein at step b) the current absorbed by the motor (M) while the accumulator (A) is being charged is also measured, and wherein at step c) the error signal is generated if the current measured at step b) does not reach a given threshold current value (T_{c}) within a given second period of time starting from the beginning of step a).

3. Method according to claim 2, wherein the evaluation on reaching a current value equal to at least said threshold current value (T_{c}) is made with the exclusion of an initial sub-period of said second period of time not longer than 1 second, preferably not longer than 0,5 seconds.

4. Method according to claim 2 or claim 3, wherein said first and second periods of time are identical to each other.

5. Method according to one or more of the preceding claims, wherein steps a) to c) are carried out if the oil temperature in the hydraulic control circuit is within a given temperature range.

6. Method according to one or more of the preceding claims, wherein steps a) to c) are carried out if the hydraulic actuation system is not operative, that is to say, if no hydraulic actuator (HA) is working, and there is therefore no oil consumption.

7. Method according to one or more of the preceding claims, wherein steps a) to c) are carried out if the values of the lateral and longitudinal accelerations to which the hydraulic actuation system is subject are within given acceleration ranges.

8. Method according to one or more of the preceding claims, wherein steps a) to c) are carried out if the voltage level of a battery which powers the motor (M) is higher than a given minimum voltage value.

9. Method according to one or more of the preceding claims, wherein the error signal possibly generated at step c) is communicated to the operator by means of a warning light or an acoustic signal.

## Patentansprüche

1. Verfahren zum Auswerten einer möglichen Verringerung des Ölpegels unter einen gegebenen Alarmwert in einem Hydraulikbetätigungssystem, insbesondere einem Hydraulikbetätigungssystem für ein Fahrzeuggetriebe, wobei das Hydraulikbetätigungssystem mindestens einen Hydraulikaktor (HA) und einen Hydrauliksteuerschaltung zum Steuern des mindestens einen Hydraulikaktors (HA) enthält und die Hydrauliksteuerschaltung einen Pumpe (P), einen Motor (M), einen Druckspeicher (A), der ausgelegt ist, durch die Pumpe (P) befüllt zu werden, und einen Drucksensor (PS) zum Messen des Drucks in der Schaltung enthält, wobei
das Verfahren die folgenden Schritte umfasst:
a) Laden des Druckspeichers (A) durch Antreiben der Pumpe (P) mittels des Motors (M);
b) Messen des Drucks in der Schaltung mittels des Drucksensors (PS), während der Druckspeicher (A) befüllt wird; und
c) Erzeugen eines Fehlersignals, wenn der in Schritt b) gemessene Druckwert in einem gegebenen ersten Zeitraum, der am Anfang von Schritt a) beginnt, einen gegebenen Druckschwellenwert (Tₚ) nicht erreicht.

2. Verfahren nach Anspruch 1, wobei der Motor (M) ein Elektromotor ist, wobei der durch den Motor (M) aufgenommene Strom während des Befüllens des Druckspeichers (A) in Schritt b) ebenfalls gemessen wird und das Fehlersignal in Schritt c) erzeugt wird, wenn der Strom, der in Schritt b) gemessen wird, in einem gegebenen zweiten Zeitraum, der am Anfang von Schritt a) beginnt, einen gegebenen Stromschwellenwert (T_{c}) nicht erreicht.

3. Verfahren nach Anspruch 2, wobei die Bewertung des Erreichens eines Stromwertes, der mindestens dem Stromschwellenwert (T_{c}) gleich ist, unter Ausschluss eines anfänglichen Unterzeitraums des zweiten Zeitraums, der nicht länger als 1 Sekunde und bevorzugt nicht länger als 0,5 Sekunden ist, vorgenommen wird.

4. Verfahren nach Anspruch 2 oder Anspruch 3, wobei der erste und der zweite Zeitraum gleich sind.

5. Verfahren nach einem oder mehreren der vorhergehenden Ansprüche, wobei die Schritte a) bis c) ausgeführt werden, wenn die Öltemperatur in der Hydrauliksteuerschaltung in einem gegebenen Temperaturbereich liegt.

6. Verfahren nach einem oder mehreren der vorhergehenden Ansprüche, wobei die Schritte a) bis c) ausgeführt werden, wenn das Hydraulikbetätigungssystem nicht in Betrieb ist, das heißt, wenn kein Hydraulikaktor (HA) arbeitet und deshalb kein Ölverbrauch vorhanden ist.

7. Verfahren nach einem oder mehreren der vorhergehenden Ansprüche, wobei die Schritte a) bis c) ausgeführt werden, wenn die Werte der Querbeschleunigung und der Längsbeschleunigung, denen das Hydraulikbetätigungssystem unterworfen ist, in gegeben Beschleunigungsbereichen liegen.

8. Verfahren nach einem oder mehreren der vorhergehenden Ansprüche, wobei die Schritte a) bis c) ausgeführt werden, wenn der Spannungspegel einer Batterie, die den Motor (M) mit Energie versorgt, höher als ein gegebener Minimalspannungswert ist.

9. Verfahren nach einem oder mehreren der vorhergehenden Ansprüche, wobei das Fehlersignal, das möglicherweise im Schritt c) erzeugt wird, mittels eines Warnlichts oder eines akustischen Signals zum Bediener kommuniziert wird.

## Revendications

1. Procédé pour évaluer une réduction possible du niveau d'huile sous un niveau d'alerte donné dans un système d'actionnement hydraulique, en particulier un système d'actionnement hydraulique pour une transmission de véhicule, dans lequel le système d'actionnement hydraulique comprend au moins un actionneur hydraulique (HA) et un circuit de commande hydraulique pour commander ledit au moins un actionneur hydraulique (HA), et dans lequel le circuit de commande hydraulique comprend une pompe (P), un moteur (M) pour entraîner la pompe (P), un accumulateur (A) agencé pour être chargé par la pompe (P) et un capteur de pression (PS) pour mesurer la pression dans le circuit,
le procédé comprenant les étapes de :
a) charger l'accumulateur (A) en entraînant la pompe (P) au moyen du moteur (M) ;
b) mesurer la pression dans le circuit au moyen du capteur de pression (PS) alors que l'accumulateur (A) est en cours de charge ; et
c) générer un signal d'erreur si la valeur de pression mesurée à l'étape b) n'atteint pas une valeur de pression seuil (Tₚ) donnée au cours d'une première période de temps donnée débutant au début de l'étape a).

2. Procédé selon la revendication 1, dans lequel le moteur (M) est un moteur électrique, dans lequel, à l'étape b), le courant consommé par le moteur (M) alors que l'accumulateur (A) est en cours de charge est également mesuré, et dans lequel, à l'étape c), le signal d'erreur est généré si le courant mesuré à l'étape b) n'atteint pas une valeur de courant seuil (T_{c}) donnée au cours d'une seconde période de temps donnée débutant au début de l'étape a).

3. Procédé selon la revendication 2, dans lequel l'évaluation sur l'atteinte d'une valeur de courant égale au moins à ladite valeur de courant seuil (T_{c}) est effectuée à l'exclusion d'une sous-période initiale de ladite seconde période de temps ne dépassant pas 1 seconde, de préférence ne dépassant pas 0,5 seconde.

4. Procédé selon la revendication 2 ou la revendication 3, dans lequel lesdites première et seconde périodes de temps sont identiques l'une à l'autre.

5. Procédé selon une ou plusieurs des revendications précédentes, dans lequel les étapes a) à c) sont exécutées si la température d'huile dans le circuit de commande hydraulique se trouve dans une plage de températures donnée.

6. Procédé selon une ou plusieurs des revendications précédentes, dans lequel les étapes a) à c) sont exécutées si le système d'actionnement hydraulique n'est pas actif, c'est-à-dire, si aucun actionneur hydraulique (HA) ne fonctionne, et qu'il n'y a par conséquent par de consommation d'huile.

7. Procédé selon une ou plusieurs des revendications précédentes, dans lequel les étapes a) à c) sont exécutées si les valeurs des accélérations latérale et longitudinale auxquelles le système d'actionnement hydraulique est soumis se trouvent dans des plages d'accélération données.

8. Procédé selon une ou plusieurs des revendications précédentes, dans lequel les étapes a) à c) sont exécutées si le niveau de tension d'une batterie qui alimente le moteur (M) est supérieur à une valeur de tension minimale donnée.

9. Procédé selon une ou plusieurs des revendications précédentes, dans lequel le signal d'erreur éventuellement généré à l'étape c) est communiqué à l'opérateur au moyen d'une lumière d'avertissement ou d'un signal acoustique.
